# EUROPEAN PATENT APPLICATION

(11) **EP 4 187 980 A1**
(43) Date of publication of application: **31.05.2023**
(21) Application number: 21845928.7
(22) Date of filing: 20.07.2021
(51) Int. Cl.: H04W 52/00

(54) **P-MPR REPORT SENDING METHOD AND APPARATUS, P-MPR REPORT RECEIVING METHOD AND APPARATUS, AND ELECTRONIC DEVICE**

(30) Priority: 22.07.2020 CN 202010712726
(71) Applicant: Vivo Mobile Communication Co., Ltd., Dongguan, Guangdong 523863 (CN)
(72) Inventor: YANG, Yu, Dongguan, Guangdong 523863 (CN)
(74) Representative: Murgitroyd & Company
(86) International application number: PCT/CN2021/107270
(87) International publication number: WO 2022/017355

(57) **Abstract**

This application discloses a method and an apparatus for sending a P-MPR report, a method and an apparatus for receiving a P-MPR report, and an electronic device. The method for sending a P-MPR report includes: sending, by a terminal, a P-MPR report to a network side device in a case that a preset P-MPR report reporting condition is met. The P-MPR report includes a P-MPR value of at least one beam.

## Description

### CROSS-REFERENCE TO RELATED APPLICATION

This application claims priority to Chinese Patent Application No. 202010712726.3, filed in China on July 22, 2020, which is incorporated herein by reference in its entirety.

### TECHNICAL FIELD

This application relates to the field of communications technologies, and in particular, to a method and an apparatus for sending a P-MPR report, a method and an apparatus for receiving a P-MPR report, and an electronic device.

### BACKGROUND

In the related art, in a case that user equipment (User Equipment, UE) communicates with a network, it is often necessary to perform power reduction on an uplink transmit power according to a requirement on maximum permissible exposure (Maximum Permissible Exposure, MPE).

A problem existing in the prior art is that in a case that the LTE performs transmission in a high frequency band by using beams, due to different spatial propagation paths of the beams, the same power reduction performed on all beams of the UE cannot fully reflect transmission performance of beam links, thereby affecting performance of an uplink.

### SUMMARY

Embodiments of this application provide a method and an apparatus for sending a P-MPR report, a method and an apparatus for receiving a P-MPR report, and an electronic device, which enable a terminal to perform transmission by selecting a beam on an optimal antenna panel.

According to a first aspect, an embodiment of this application provides a method for sending a P-MPR report. The method includes:
sending, by a terminal, a P-MPR report to a network side device in a case that a preset P-MPR report reporting condition is met, where the P-MPR report includes a P-MPR value of at least one beam.

According to a second aspect, an embodiment of this application provides a method for receiving a P-MPR report. The method includes:
receiving, by a network side device, a P-MPR report sent by a terminal, where the P-MPR report includes a P-MPR value of at least one beam.

According to a third aspect, an embodiment of this application provides an apparatus for sending a P-MPR report. The apparatus includes:
a sending module, configured to send a P-MPR report to a network side device in a case that a preset P-MPR report reporting condition is met, where the P-MPR report includes a P-MPR value of at least one beam.

In some embodiments, the preset P-MPR report reporting condition includes at least one of the following:
determining, by the terminal, occurrence of a maximum permissible exposure event;
determining, by the terminal, that equivalent isotropically radiated power reaches or exceeds a maximum permissible exposure standard;
determining, by the terminal, that the equivalent isotropically radiated power reaches or exceeds a first preset value;
determining, by the terminal, that maximum equivalent isotropically radiated power reaches or exceeds the maximum permissible exposure standard;
determining, by the terminal, that the maximum equivalent isotropically radiated power reaches or exceeds a second preset value;
determining, by the terminal, that transmit power reaches or exceeds a third preset value;
determining, by the terminal, that the transmit power reaches or exceeds the maximum permissible exposure standard;
determining, by the terminal, that maximum transmit power reaches or exceeds a fourth preset value;
determining, by the terminal, that the maximum transmit power reaches or exceeds the maximum permissible exposure standard;
determining, by the terminal, that a radio frequency device is close to a human body;
an antenna panel being activated or started or added;
a measured path loss value or a variation value of path loss of a current beam meeting a first preset condition;
a power reduction value or a variation value of power of the current beam meeting a second preset condition;
a P-MPR value or a variation value of P-MPR value of the current beam meeting a third preset condition;
a link quality value or a variation value of link quality of the current beam meeting a fourth preset condition;
a difference between the measured path loss value of the current beam and a measured path loss value of a first beam meeting a fifth preset condition, where the first beam is a beam different from the current beam, a target beam, or an unused beam;
a difference between the power reduction value of the current beam and a power reduction value of the first beam meeting a sixth preset condition;
a difference between the P-MPR value of the current beam and a P-MPR value of the first beam meeting a seventh preset condition; and
a difference between the link quality value of the current beam and a link quality value of the first beam meeting an eighth preset condition.

In some embodiments, the P-MPR report further includes at least one of the following:
identification information of the at least one beam;
a maximum output power value of the at least one beam;
a power headroom value of the at least one beam; and
identification information of an antenna panel corresponding to the at least one beam.

In some embodiments, the identification information of the beam includes at least one of the following:
identification information or index information or indication information of a sounding reference signal resource SRS resource;
identification information or index information or indication information of an SRS resource set;
source reference signal information in spatial relation information of the SRS resource;
identification information or index information or indication information of a first resource; and
identification information or index information or indication information of a first resource set.

The first resource includes at least one of the following:
a downlink reference signal resource DL RS resource;
a source reference signal in a transmission configuration indication TCI state of the DL RS resource;
a reference signal resource used for beam training;
a source reference signal in a TCI state or in a spatial relation of the reference signal resource used for beam training;
a candidate beam reference signal resource;
a source reference signal in a TCI state or in a spatial relation of the candidate beam reference signal resource; and
a synchronization signal block SSB resource.

In some embodiments, a downlink reference signal includes at least one of the following: an SSB and a channel state information reference signal CSI-RS.

In some embodiments, the identification information or the index information or the indication information of the first resource includes at least one of the following:
identification information or index information or indication information of one first resource associated with the SRS resource; and
identification information or index information or indication information of a first resource in a first resource set associated with the SRS resource;
   and/or
the identification information or the index information or the indication information of the first resource set includes:
   identification information or index information or indication information of the first resource set associated with the SRS resource.

In some embodiments, in a case that the reference signal resource used for beam training or the candidate beam reference signal resource is not configured, the identification information of the beam includes identification information or index information or indication information of the SSB resource, or includes identification information or index information or indication information of an SSB resource set.

In some embodiments, the identification information of the antenna panel corresponding to the at least one beam includes an explicit antenna panel identifier or an implicit antenna panel identifier, where
the explicit antenna panel identifier includes at least one of the following: an identifier of the antenna panel, a reference signal resource identifier or index or indication corresponding to the antenna panel, a reference signal resource set identifier or index or indication corresponding to the antenna panel, a transmission configuration indication TCI state identifier or index or indication corresponding to the antenna panel, a quasi-colocation QCL information identifier or index or indication corresponding to the antenna panel, and a spatial relation identifier or index or indication corresponding to the antenna panel; and
the implicit antenna panel identifier is first information and capable of being used for determining the identification information of the antenna panel, where the first information includes at least one of the following: a correspondence between a DL RS resource and the antenna panel, a correspondence between an uplink reference signal resource UL RS resource and the antenna panel, a correspondence between a DL RS resource set and the antenna panel, a correspondence between a UL RS resource set and the antenna panel, a correspondence between DL RS resource configuration information and the antenna panel, a correspondence between UL RS resource configuration information and the antenna panel, and beam identification information.

In some embodiments, the P-MPR report includes the identification information of the antenna panel corresponding to the at least one beam in a case that at least one of the following conditions is met:
reporting the P-MPR report to the network side device;
the at least one beam corresponding to different antenna panels;
the antenna panel corresponding to the at least one beam being different from an antenna panel corresponding to a current beam;
the at least one beam including a beam on a currently inactivated antenna panel;
the at least one beam including a beam on a currently unused antenna panel;
a quantity of antenna panels corresponding to the at least one beam being greater than 1;
antenna panel on which a beam corresponding to the P-MPR value is located being different from the antenna panel corresponding to the current beam;
the P-MPR value including a P-MPR value of the beam on the currently inactivated antenna panel;
the P-MPR value including a P-MPR value of the beam on the currently unused antenna panel;
a quantity of antenna panels on which the beam corresponding to the P-MPR value is located being greater than 1;
an antenna panel being activated or started or added; and
a current uplink beam being to be switched or having been switched to be a beam on a second antenna panel, where the second antenna panel is an antenna panel other than an antenna panel on which the current uplink beam is located.

In some embodiments, the sending module sends the P-MPR report by using any one of the following beams:
a beam on a currently activated antenna panel;
a currently used beam;
an other beam on an antenna panel on which the currently used beam is located;
a beam on a currently inactivated antenna panel;
a beam on a currently unused antenna panel; and
a currently unused beam.

In some embodiments, the P-MPR report is carried in at least one of the following:
a power headroom report; and
a beam report.

In some embodiments, the sending module is specifically configured to perform at least one of the following:
carry the P-MPR report in the beam report in a case that first configuration information from the network side device is received;
carry a first value in the beam report in a case that second configuration information from the network side device is received, where the first value is calculated by using a layer 1 reference signal received power L1-RSRP value and the P-MPR value;
carry the P-MPR report in the power headroom report in a case that third configuration information from the network side device is received or a preset power headroom report trigger condition is met; and
carry a second value in the power headroom report in a case that fourth configuration information from the network side device is received or the power headroom report trigger condition is met, where the second value is calculated by using a power headroom and the P-MPR value or calculated by using maximum transmit power and the P-MPR value.

In some embodiments, the first configuration information is a report quantity reportQuantity in a channel state information report configuration and indicates carrying of the P-MPR report in the beam report;
the second configuration information indicates carrying of the first value in the beam report, where the first value is specific to an uplink beam;
the third configuration information indicates carrying of the P-MPR report in the power headroom report; and
the fourth configuration information indicates carrying of the second value in the power headroom report.

In some embodiments, the sending module is specifically configured to: send a power headroom report carrying a P-MPR report and a power headroom report without carrying a P-MPR report by using different uplink resources; and/or
send a beam report carrying a P-MPR report and a beam report without carrying a P-MPR report by using different uplink resources.

In some embodiments, the uplink resource used for sending the power headroom report carrying a P-MPR report is configured by the network side device; and/or
the uplink resource used for sending the power headroom report without carrying a P-MPR report is configured by the network side device; and/or
the uplink resource used for sending the beam report carrying a P-MPR report is configured by the network side device; and/or
the uplink resource used for sending the beam report without carrying a P-MPR report is configured by the network side device.

In some embodiments, the sending module is specifically configured to: scramble the power headroom report carrying a P-MPR report and the power headroom report without carrying a P-MPR report by using different scrambling codes; and/or
scramble the beam report carrying a P-MPR report and the beam report without carrying a P-MPR report by using different scrambling codes.

According to a fourth aspect, an embodiment of this application provides an apparatus for receiving a P-MPR report. The apparatus includes:
a receiving module, configured to receive a P-MPR report sent by a terminal, where the P-MPR report includes a P-MPR value of at least one beam.

In some embodiments, the sending module is further configured to perform at least one of the following:
sending first configuration information to the terminal to indicate carrying of the P-MPR report in the beam report;
send second configuration information to the terminal to indicate carrying of a first value in the beam report, where the first value is calculated by using a layer 1 reference signal received power L1-RSRP value and the P-MPR value;
sending third configuration information to the terminal to indicate carrying of the P-MPR report in the power headroom report; and
send fourth configuration information to the terminal to indicate carrying of a second value in the power headroom report, where the second value is calculated by using a power headroom and the P-MPR value or calculated by using maximum transmit power and the P-MPR value.

In some embodiments,
the first configuration information is a report quantity reportQuantity in a channel state information report configuration and indicates carrying of the P-MPR report in the beam report;
the second configuration information indicates carrying of the first value in the beam report, where the first value is specific to an uplink beam;
the third configuration information indicates carrying of the P-MPR report in the power headroom report; and
the fourth configuration information indicates carrying of the second value in the power headroom report.

In some embodiments, the apparatus further includes a configuration module, configured to perform at least one of the following:
configure, for the terminal, an uplink resource used for sending a power headroom report carrying a P-MPR report;
configure, for the terminal, an uplink resource used for sending a power headroom report without carrying a P-MPR report;
configure, for the terminal, an uplink resource used for sending a beam report carrying a P-MPR report; and
configure, for the terminal, an uplink resource used for sending a beam report without carrying a P-MPR report.

According to a fifth aspect, an embodiment of this application provides an electronic device, including a processor, a memory, and a program stored in the memory and executable on the processor, where when the program is executed by the processor, steps of the method described above are implemented.

According to a sixth aspect, an embodiment of this application provides a readable storage medium, storing a program or an instruction, when the program or instruction is executed by a processor, steps of the method described above are implemented.

According to a seventh aspect, an embodiment of this application provides a chip, including: a processor and a communication interface, where the communication interface is coupled to the processor, and the processor is configured to execute a program or an instruction, to implement the method described in the first aspect or the second aspect.

In the embodiments of this application, a terminal sends a P-MPR report to a network side device in a case that a preset P-MPR report reporting condition is met, where the P-MPR report includes a P-MPR value of at least one beam. The network side device may send scheduling information to the terminal according to the P-MPR report, to perform channel scheduling and reference signal transmission. Technical solutions in the embodiments are applicable to a terminal with a plurality of antenna panels. After the terminal reports P-MPR values of beams, it is helpful for the terminal to select a better antenna panel and beam according to the P-MPR values of the beams, thereby ensuring correct transmission of data and optimizing transmission performance.

### BRIEF DESCRIPTION OF THE DRAWINGS

To describe technical solutions in embodiments of this application more clearly, the following briefly introduces the accompanying drawings required for describing the embodiments of this application. Apparently, the accompanying drawings in the following description show only some embodiments of this application, and a person of ordinary skill in the art may still derive other accompanying drawings from these accompanying drawings without creative efforts.
FIG. 1 is a schematic diagram of a wireless communication system;
FIG. 2 is a schematic flowchart of a method for sending a P-MPR report according to an embodiment of this application;
FIG. 3 is a schematic flowchart of a method for receiving a P-MPR report according to an embodiment of this application;
FIG. 4 is a schematic structural diagram of an apparatus for sending a P-MPR report according to an embodiment of this application;
FIG. 5 is a schematic structural diagram of an apparatus for receiving a P-MPR report according to an embodiment of this application;
FIG. 6 is a schematic diagram of composition of a terminal according to an embodiment of this application; and
FIG. 7 is a schematic diagram of composition of a network side device according to an embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

In the specification and claims of this application, and terms such as "first" and "second" are used to distinguish similar objects, but are not used to describe a specific sequence or order. It should be understood that the data used in such a way are interchangeable in an appropriate case, so that the embodiments of this application can be implemented in a sequence other than the sequence illustrated or described herein. In addition, in the specification and the claims, "and/or" means at least one of the connected objects, and the character "/" generally indicates an "or" relationship between the associated objects.

The technologies described in this application are not limited to a long term evolution (Long Term Evolution, LTE) system/an LTE-advanced (LTE-Advanced, LTE-A) system, and can also be applied to various wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, and another system. The terms "system" and "network" may usually be used interchangeably. A CDMA system can implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. A TDMA system can implement radio technologies such as a global system for mobile communication (Global System for Mobile Communication, GSM). An OFDMA system can implement radio technologies such as ultra mobile broadband (Ultra Mobile Broadband, UMB), evolution UTRA (Evolution-UTRA, E-UTRA), IEEE 802.11 (Wi-Fi), IEEE 802.16 (WiMAX), IEEE 802.20, and Flash-OFDMA. UTRA and E-UTRA are parts of a universal mobile telecommunications system (Universal Mobile Telecommunications System, UMTS). LTE and more advanced LTE (for example, LTE-A) are new releases of UMTS using E-UTRA. UTRA, E-UTRA, UMTS, LTE, LTE-A, and GSM are described in documents of an organization named "3rd generation partnership project" (3rd Generation Partnership Project, 3GPP). CDMA2000 and UMB are described in documents of an organization named "3rd generation partnership project 2" (3GPP2). The technology described in this application can be applied to the systems and radio technologies mentioned above, and can also be applied to other systems and radio technologies. However, in the following description, an NR system is described for an illustrative purpose, and the term NR is used in most of the following description, although these technologies may also be applied to applications other than NR system applications.

The following description provides examples and is not intended to limit the scope, the applicability, or the configuration described in the claims. Functions and layouts of the discussed elements may be changed without departing from the spirit and scope of the present disclosure. Various procedures or components may be appropriately omitted, replaced, or added in various examples. For example, the described method may be performed in an order different from the described order, and various steps may be added, omitted, or combined. In addition, features described with reference to some examples may also be combined in other examples.

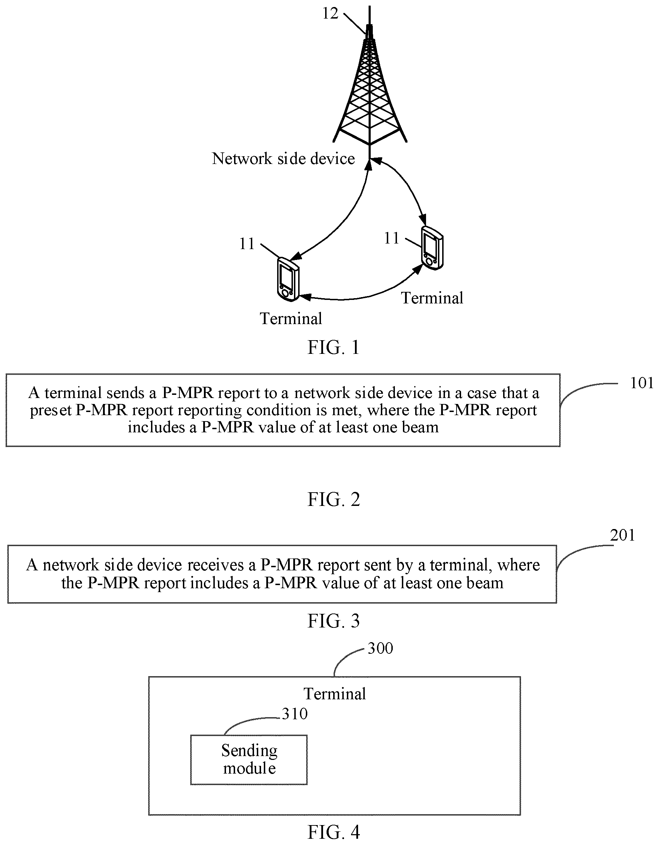

FIG. 1 is a block diagram of a wireless communication system to which an embodiment of this application is applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal 11 is not limited in this embodiment of this application. The network side device 12 may be a base station or a core network. The foregoing base station may be a 5G base station or a future-generation base station (such as a gNB or a 5G NR NB), or may be a base station (such as an eNB, a WLAN access point, or another access point) in another communication system, or may be a location server (such as an E-SMLC or an LMF (Location Manager Function)). The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a WLAN access point, a WiFi node, or another appropriate term in the field. As long as the same technical effect is achieved, the base station is not limited to a specific technical word. It should be noted that only a base station in the NR system is used as an example in this embodiment of this application, but a specific type of the base station and a specific communication system are not limited in this embodiment of this application.

Standards of wireless access technologies such as long term evolution (Long Term Evolution, LTE)/LTE-advanced (LTE-Advanced, LTE-A) are all constructed based on a multiple-in multiple-out (multiple-in multiple-out, MIMO) technology plus an orthogonal frequency division multiplexing (Orthogonal Frequency Division Multiplexing, OFDM) technology. In the MIMO technology, a spatial degree of freedom that can be obtained by a multi-antenna system is used to improve a peak rate and a utilization rate of a frequency spectrum of the system.

A dimension of the MIMO technology is continuously extended. In some communication protocols, a maximum of 4 layers of MIMO transmission can be supported. In an enhanced MU-MIMO technology, a maximum of 4 downlink data layers can be supported in multi-user MIMO transmission in a transmission mode (Transmission Mode, TM)-8. In some communication protocols, a transmission capability of single-user MIMO (Single-User MIMO, SU-MIMO) can be extended to a maximum of 8 data layers.

The MIMO technology is advancing in a three-dimensional and massive direction. The massive (massive) MIMO technology uses massive antenna arrays, which can greatly improve a utilization rate of a frequency band of a system and support a larger quantity of access users. Therefore, the massive MIMO technology is one of the most promising physical layer technologies for a next-generation mobile communication system.

In the massive MIMO technology, in a case that an all-digital array is used, a maximum spatial resolution and optimal MU-MIMO performance can be achieved. However, such a structure needs a large quantity of analog to digital/digital to analog (Analog to Digital, AD/ Digital to Analog, DA) converters and a large quantity of complete radio frequency-baseband processing channels, which brings huge burdens on equipment costs and baseband processing complexity.

To avoid the foregoing implementation costs and equipment complexity, a digital to analog hybrid beamforming technology emerges as the times require. That is, on the basis of conventional digital domain beamforming, level-one beamforming is added to a radio frequency signal at a front end close to the antenna system. Through analog beamforming, a transmitted signal can be roughly matched with a channel in a relatively simple manner. A dimension of an equivalent channel formed after analog beamforming is less than an actual quantity of antennas. Therefore, a quantity of AD/DA converters and digital channels required thereafter and the corresponding baseband processing complexity can all be greatly reduced. Residual interference in an analog beamforming part can be processed again in a digital domain, to ensure quality of MU-MIMO transmission. Compared with all-digital beamforming, digital to analog hybrid beamforming is a compromise between performance and complexity, and has a better practical prospect in a system with large bandwidth in a high frequency band or with a large quantity of antennas.

In the research on the next-generation communication system after 4G, an operating frequency band supported by the system is raised to above 6 GHz, up to about 100 GHz. The high frequency band has relatively rich idle frequency resources, which can provide greater throughput for data transmission. Compared with a low frequency band, a short wavelength of a high frequency signal enables more antenna array elements to be arranged on an antenna panel of a same size, thereby forming a beam with stronger directivity and a narrower lobe by using the beamforming technology. Therefore, a combination of massive antennas and high frequency communication is also one of the future trends.

According to analog beamforming, transmission is performed at full bandwidth, and array elements on the antenna panel of each high frequency antenna array in each polarized direction can only transmit an analog beam in a time-division multiplexing manner. A beamforming weight of the analog beam is implemented by adjusting a parameter of an equipment such as a phase shifter in a radio frequency front end.

Currently, an analog beamforming vector is usually trained in a polling manner, that is, the array elements of each antenna panel in each polarized direction sequentially transmit a training signal (that is, a candidate beamforming vector) at an agreed time in the time-division multiplexing manner. After measurement, the terminal feeds back a beam report for a network side to implement analog beam transmission by using the training signal during next service transmission. Content of the beam report usually includes identifiers of several optimal transmitted beams and received power or signal to interference plus noise ratios corresponding to the transmitted beams.

During beam measurement (beam measurement), a network configures a reference signal resource set (RS resource set), which includes at least one reference signal resource such as an SSB resource or a CSI-RS resource. The LTE measures Ll-RSRP/an L1-SINR of each RS resource, and reports at least one optimal measurement result to the network. Reported content includes an SSBRI or a CRI and the corresponding L1-RSRP/L1-SINR. The content of the report reflects at least one optimal beam and quality thereof for the network to determine information about the beam used for performing channel or signal transmission with the UE.

After beam measurement is performed and the beam report is obtained, the network may perform beam indication (beam indication) on a downlink channel and an uplink channel or on a downlink reference signal and an uplink reference signal, to establish a beam link between the network and the UE, thereby implementing channel or reference signal transmission.

For a beam indication of a physical downlink control channel (Physical Downlink Control Channel, PDCCH), the network configures K transmission configuration indication (Transmission Configuration Indication, TCI) states for each control-resource set (control-resource set, CORESET) by using radio resource control (Radio Resource Control, RRC) signaling. In a case that K > 1, 1 TCI state is indicated or activated by using a media access control control element (MAC CE), and in a case that K=1, no additional MAC CE command is required. When monitoring the PDCCH, the LTE uses the same quasi-colocation (Quasi-colocation, QCL) information for all search spaces (search space) in the CORESET, that is, the UE uses the same TCI state to monitor the PDCCH. A source reference signal (referenceSignal) (such as a periodic CSI-RS resource, a semi-persistent CSI-RS resource, or an SS block) port in the TCL state and a UE-specific PDCCH demodulation reference signal (Demodulation Reference Signal, DMRS) port are spatially QCL-ed. The UE can learn, according to the TCI state, which receiving beam is used to receive the PDCCH.

For a beam indication of a PDSCH, the network configures M TCI states by using the RRC signaling, and then, activates 2N TCI states by using an MAC CE command, and subsequently, notifies the TCI state by using an N-bit TCI field of downlink control information (Downlink Control Information, DCI). A referenceSignal port in the TCI state and a DMRS port of a to-be-scheduled PDSCH are QCL-ed. The LTE can learn, according to the TCI state, which receiving beam is used to receive the PDSCH.

For a beam indication of a CSI-RS, in a case that the CSI-RS is a periodic CSI-RS, the network configures QCL information for the CSI-RS resource by using the RRC signaling. In a case that the CSI-RS is a semi-persistent CSI-RS, the network indicates QCL information of a CSI-RS resource when activating, by using a MAC CE command, the CSI-RS resource in a CSI-RS resource set configured through RRC. In a case that the CSI-RS is an aperiodic CSI-RS, the network configures QCL for the CSI-RS resource by using the RRC signaling and triggers the CSI-RS by using the DCI.

For a beam indication of a physical uplink control channel (Physical Uplink Control Channel, PUCCH), the network configures spatial relation information (spatial relation information) for each PUCCH resource by using the RRC signaling and a parameter PUCCH-SpatialRelationInfo. In a case that there is a plurality pieces of spatial relation information configured for the PUCCH resource, the MAC-CE is used to activate one piece of the spatial relation information. In a case that there is only one piece of spatial relation information configured for the PUCCH resource, no additional MAC CE command is required.

For a beam indication of a physical uplink shared channel (Physical Uplink Shared Channel, PUSCH), the spatial relation information of the PUSCH is that in a case that the DCI carried by the PDCCH schedules the PUSCH, each SRI codepoint (codepoint) of a sounding reference signal resource indicator (SRS resource indicator, SRI) field (field) in the DCI indicates an SRI, where the SRI is used for indicating the spatial relationship information of the PUSCH.

For a beam indication of a sounding reference signal (Sounding Reference Signal, SRS), in a case that the SRS is a periodic SRS, the network configures the spatial relation information for an SRS resource by using the RRC signaling. In a case that the SRS is a semi-persistent SRS, the network activates, by using the MAC CE command, one of sets of spatial relation information configured by the RRC. In a case that the SRS is an aperiodic SRS, the network configures the spatial relation information for the SRS resource by using the RRC signaling, and may also use the MAC CE command to update the spatial relation information of the aperiodic SRS resource.

MPE is short for maximum permissible exposure. A standard of MPE is specified in the related art, including a maximum radiation value or a maximum exposure level that can cause harm to a human body after the human body goes through radiation.

P-MPR is short for power management maximum power reduction. The power management maximum power reduction refers to a maximum permissible reduction value of output power of the LTE. In a case that radio transmit power is relatively large and a radio frequency device is relatively close to the human body, to ensure that the standard of MPE is met, it is necessary to reduce transmit power. In the current technology, the UE determines maximum output power according to P-MPR and reports the maximum output power to the network, to ensure that an available battery energy absorption requirement is met and an undesired radiation requirement is resolved.

The information about the beam mentioned above may also be referred to as beam information, spatial relation (spatial relation) information, spatial domain transmission filter (spatial domain transmission filter) information, spatial filter (spatial filter) information, transmission configuration indication state (TCI state) information, quasi-colocation (QCL) information, a QCL parameter, or the like. Downlink beam information may usually be indicated by using the TCI state information or the QCL information. Uplink beam information may usually be indicated by using the spatial relation information.

The mentioned antenna panel may also be referred to as an antenna group, an antenna port group, an antenna set, an antenna port set, a beam set, a beam sub-set, an antenna array, an antenna port array, an antenna sub-array, an antenna port sub-array, a logic entity, an entity, an antenna entity, or the like.

An identifier of the panel may be an identifier of the antenna panel, an identifier of the reference signal resource, an identifier of the reference signal resource set, an identifier of the TCI state, an identifier of the QCL information, an identifier of the spatial relation, or the like.

An embodiment of this application provides a method for sending a P-MPR report. As shown in FIG. 2, the method includes the following steps:
Step 101: A terminal sends a P-MPR report to a network side device in a case that a preset P-MPR report reporting condition is met, where the P-MPR report includes a P-MPR value of at least one beam.

In this embodiment of this application, the terminal sends the P-MPR report to the network side device in a case that the preset P-MPR report reporting condition is met, where the P-MPR report includes the P-MPR value of the at least one beam. The network side device may send scheduling information to the terminal according to the P-MPR report, to schedule channel or reference signal transmission. The technical solution in this embodiment is applicable to a terminal with a plurality of antenna panels. After the terminal reports P-MPR values of beams, it is helpful for the network side device and the terminal to select a better antenna panel and beam according to the P-MPR values of the beams, thereby ensuring correct transmission of data and optimizing transmission performance.

In some embodiments, the preset P-MPR report reporting condition may include at least one of the following:
determining, by the terminal, occurrence of a maximum permissible exposure event;
determining, by the terminal, that equivalent isotropically radiated power reaches or exceeds a maximum permissible exposure standard;
determining, by the terminal, that the equivalent isotropically radiated power reaches or exceeds a first preset value;
determining, by the terminal, that maximum equivalent isotropically radiated power reaches or exceeds the maximum permissible exposure standard;
determining, by the terminal, that the maximum equivalent isotropically radiated power reaches or exceeds a second preset value;
determining, by the terminal, that transmit power reaches or exceeds a third preset value;
determining, by the terminal, that the transmit power reaches or exceeds the maximum permissible exposure standard;
determining, by the terminal, that maximum transmit power reaches or exceeds a fourth preset value;
determining, by the terminal, that the maximum transmit power reaches or exceeds the maximum permissible exposure standard;
determining, by the terminal, that a radio frequency device is close to a human body;
an antenna panel being activated or started or added;
a measured path loss value or a variation value of path loss of a current beam meeting a first preset condition;
a power reduction value or a variation value of power of the current beam meeting a second preset condition;
a P-MPR value or a variation value of P-MPR value of the current beam meeting a third preset condition;
a link quality value or a variation value of link quality of the current beam meeting a fourth preset condition;
a difference between the measured path loss value of the current beam and a measured path loss value of a first beam meeting a fifth preset condition, where the first beam is a beam different from the current beam, a target beam, or an unused beam;
a difference between the power reduction value of the current beam and a power reduction value of the first beam meeting a sixth preset condition;
a difference between the P-MPR value of the current beam and a P-MPR value of the first beam meeting a seventh preset condition; and
a difference between the link quality value of the current beam and a link quality value of the first beam meeting an eighth preset condition.

In the foregoing solution, the terminal needs to measure the equivalent isotropically radiated power, the maximum equivalent isotropically radiated power, the transmit power, and the maximum transmit power first, and then, determines whether the preset P-MPR report reporting condition is met according to measurement results. The first to fourth preset values and the first to eighth preset conditions may be configured by the network side device or specified in a protocol. In a case that at least one of the foregoing items is met, the terminal sends the P-MPR report to the network side device, so that the network side device can learn the P-MPR value of the beam.

In some embodiments, the P-MPR report further includes at least one the following:
identification information of the at least one beam;
a maximum output power value of the at least one beam;
a power headroom value of the at least one beam; and
identification information of an antenna panel corresponding to the at least one beam.

In some embodiments, the identification information of the beam includes at least one the following:
identification information or index information or indication information of a sounding reference signal resource SRS resource;
identification information or index information or indication information of an SRS resource set;
source reference signal information in spatial relation information of the SRS resource;
identification information or index information or indication information of a first resource; and
identification information or index information or indication information of a first resource set.

The first resource includes at least one of the following:
a downlink reference signal resource DL RS resource;
a source reference signal in a transmission configuration indication TCI state of the DL RS resource;
a reference signal resource used for beam training;
a source reference signal in a TCI state or in a spatial relation of the reference signal resource used for beam training;
a candidate beam reference signal resource;
a source reference signal in a TCI state or in a spatial relation of the candidate beam reference signal resource; and
a synchronization signal block SSB resource.

In some embodiments, a downlink reference signal includes at least one of the following: an SSB and a channel state information reference signal CSI-RS.

In the foregoing embodiments, the identification information or the index information or the indication information of the first resource includes at least one of the following:
identification information or index information or indication information of one first resource associated with the SRS resource; and
identification information or index information or indication information of a first resource in a first resource set associated with the SRS resource;
   and/or
the identification information or the index information or the indication information of the first resource set includes:
   identification information or index information or indication information of the first resource set associated with the SRS resource.

For example, in a specific example, identification information or index information or indication information of the downlink reference signal resource includes at least one of the following:
identification information or index information or indication information of one DL RS resource associated with the SRS resource; and
identification information or index information or indication information of a DL RS resource in a DL RS resource set associated with the SRS resource.

In some embodiments, in a case that the reference signal resource used for beam training or the candidate beam reference signal resource is not configured, the identification information of the beam includes identification information or index information or indication information of the SSB resource, or includes identification information or index information or indication information of an SSB resource set.

In some embodiments, the identification information of the antenna panel corresponding to the at least one beam includes an explicit antenna panel identifier or an implicit antenna panel identifier, where
the explicit antenna panel identifier includes at least one of the following: an identifier of the antenna panel, a reference signal resource identifier or index or indication corresponding to the antenna panel, a reference signal resource set identifier or index or indication corresponding to the antenna panel, a transmission configuration indication TCI state identifier or index or indication corresponding to the antenna panel, a quasi-colocation QCL information identifier or index or indication corresponding to the antenna panel, and a spatial relation identifier or index or indication corresponding to the antenna panel; and
the implicit antenna panel identifier is first information and capable of being used for determining the identification information of the antenna panel, where the first information includes at least one of the following: a correspondence between a DL RS resource and the antenna panel, a correspondence between an uplink reference signal resource UL RS resource and the antenna panel, a correspondence between a DL RS resource set and the antenna panel, a correspondence between a UL RS resource set and the antenna panel, a correspondence between DL RS resource configuration information and the antenna panel, a correspondence between UL RS resource configuration information and the antenna panel, and beam identification information.

In some embodiments, the P-MPR report includes the identification information of the antenna panel corresponding to the at least one beam in a case that at least one of the following conditions is met:
reporting the P-MPR report to the network side device;
the at least one beam corresponding to different antenna panels;
the antenna panel corresponding to the at least one beam being different from an antenna panel corresponding to a current beam;
the at least one beam including a beam on a currently inactivated antenna panel;
the at least one beam including a beam on a currently unused antenna panel;
a quantity of antenna panels corresponding to the at least one beam being greater than 1;
antenna panel on which a beam corresponding to the P-MPR value is located being different from the antenna panel corresponding to the current beam;
the P-MPR value including a P-MPR value of the beam on the currently inactivated antenna panel;
the P-MPR value including a P-MPR value of the beam on the currently unused antenna panel;
a quantity of antenna panels on which the beam corresponding to the P-MPR value is located being greater than 1;
an antenna panel being activated or started or added; and
a current uplink beam being to be switched or having been switched to be a beam on a second antenna panel, where the second antenna panel is an antenna panel other than an antenna panel on which the current uplink beam is located.

In some embodiments, the terminal sends the P-MPR report by using any one of the following beams:
a beam on a currently activated antenna panel;
a currently used beam;
an other beam on an antenna panel on which the currently used beam is located;
a beam on a currently inactivated antenna panel;
a beam on a currently unused antenna panel; and
a currently unused beam.

In some embodiments, the P-MPR report may be carried in at least one of the following:
a power headroom report; and
a beam report.

In this way, it is unnecessary to use a dedicated communication resource to send the P-MPR report, which can save the communication resource.

In some embodiments, the method further includes at least one of the following:
carrying the P-MPR report in the beam report in a case that first configuration information from the network side device is received;
carrying a first value in the beam report in a case that second configuration information from the network side device is received, where the first value is calculated by using a layer 1 reference signal received power L 1-RSRP value and the P-MPR value;
carrying the P-MPR report in the power headroom report in a case that third configuration information from the network side device is received or a preset power headroom report trigger condition is met; and
carrying a second value in the power headroom report in a case that fourth configuration information from the network side device is received or the power headroom report trigger condition is met, where the second value is calculated by using a power headroom and the P-MPR value or calculated by using maximum transmit power and the P-MPR value.

The first value may be obtained by adding the L1-RSRP value to the P-MPR value or subtracting the L1-RSRP value from the P-MPR value. The second value may be obtained by adding the power headroom to the P-MPR value or subtracting the power headroom from the P-MPR value, or may be obtained by adding the maximum transmit power to the P-MPR value or subtracting the maximum transmit power from the P-MPR value.

In some embodiments, the first configuration information is a report quantity reportQuantity in a channel state information report configuration and indicates carrying of the P-MPR report in the beam report;
the second configuration information indicates carrying of the first value in the beam report, where the first value is specific to an uplink beam;
the third configuration information indicates carrying of the P-MPR report in the power headroom report; and
the fourth configuration information indicates carrying of the second value in the power headroom report.

In some embodiments, a power headroom report carrying a P-MPR report and a power headroom report without carrying a P-MPR report are sent by using different uplink resources; and/or
a beam report carrying a P-MPR report and a beam report without carrying a P-MPR report are sent by using different uplink resources.

In some embodiments, the uplink resource used for sending the power headroom report carrying a P-MPR report is configured by the network side device; and/or
the uplink resource used for sending the power headroom report without carrying a P-MPR report is configured by the network side device; and/or
the uplink resource used for sending the beam report carrying a P-MPR report is configured by the network side device; and/or
the uplink resource used for sending the beam report without carrying a P-MPR report is configured by the network side device.

In this way, according to the uplink resources, the beam report carrying a P-MPR report and the beam report without carrying a P-MPR report can be distinguished, and the power headroom report carrying a P-MPR report and the power headroom report without carrying a P-MPR report can be distinguished.

In some embodiments, the power headroom report carrying a P-MPR report and the power headroom report without carrying a P-MPR report are scrambled by using different scrambling codes; and/or
the beam report carrying a P-MPR report and the beam report without carrying a P-MPR report are scrambled by using different scrambling codes.

In this way, according to different scrambling codes, the beam report carrying a P-MPR report and the beam report without carrying a P-MPR report can be distinguished, and the power headroom report carrying a P-MPR report and the power headroom report without carrying a P-MPR report can be distinguished.

An embodiment of this application provides a method for receiving a P-MPR report. As shown in FIG. 3, the method includes the following steps:
Step 201: A network side device receives a P-MPR report sent by a terminal, where the P-MPR report includes a P-MPR value of at least one beam.

In this embodiment of this application, the terminal sends the P-MPR report to the network side device in a case that a preset P-MPR report reporting condition is met, where the P-MPR report includes the P-MPR value of the at least one beam. The network side device may send scheduling information to the terminal according to the P-MPR report, to perform channel scheduling and reference signal transmission. The technical solution in this embodiment is applicable to a terminal with a plurality of antenna panels. After the terminal reports P-MPR values of beams, it is helpful for the network side device and the terminal to select a better antenna panel and beam according to the P-MPR values of the beams, thereby ensuring correct transmission of data and optimizing transmission performance.

In some embodiments, the method further includes at least one of the following:
sending first configuration information to the terminal to indicate carrying of the P-MPR report in the beam report;
sending second configuration information to the terminal to indicate carrying of a first value in the beam report, where the first value is calculated by using a layer 1 reference signal received power L1-RSRP value and the P-MPR value;
sending third configuration information to the terminal to indicate carrying of the P-MPR report in the power headroom report; and
sending fourth configuration information to the terminal to indicate carrying of a second value in the power headroom report, where the second value is calculated by using a power headroom and the P-MPR value or is calculated by using maximum transmit power and the P-MPR value.

It may be indicated that the first value is obtained by adding the L1-RSRP value to the P-MPR value or subtracting the L1-RSRP value from the P-MPR value. It may be indicated that the second value is obtained by adding the power headroom to the P-MPR value or subtracting the power headroom from the P-MPR value, or the second value is obtained by adding the maximum transmit power to the P-MPR value or subtracting the maximum transmit power from the P-MPR value.

In some embodiments,
the first configuration information is a report quantity reportQuantity in a channel state information report configuration and indicates carrying of the P-MPR report in the beam report;
the second configuration information indicates carrying of the first value in the beam report, where the first value is specific to an uplink beam;
the third configuration information indicates carrying of the P-MPR report in the power headroom report; and
the fourth configuration information indicates carrying of the second value in the power headroom report.

In some embodiments, the method further includes at least one of the following:
configuring, for the terminal, an uplink resource used for sending a power headroom report carrying a P-MPR report;
configuring, for the terminal, an uplink resource used for sending a power headroom report without carrying a P-MPR report;
configuring, for the terminal, an uplink resource used for sending a beam report carrying a P-MPR report; and
configuring, for the terminal, an uplink resource used for sending a beam report without carrying a P-MPR report.

In this way, according to the uplink resources, the beam report carrying a P-MPR report and the beam report without carrying a P-MPR report can be distinguished, and the power headroom report carrying a P-MPR report and the power headroom report without carrying a P-MPR report can be distinguished.

It should be noted that an execution entity of the method for sending a P-MPR report provided in the embodiments of this application may be an apparatus for sending a P-MPR report, or may be a module that is in the apparatus for sending a P-MPR report and that is configured to execute and load the method for sending a P-MPR report. In this embodiment of this application, an example in which the method for sending a P-MPR report is executed and loaded by the apparatus for sending a P-MPR report is used to describe the method for sending a P-MPR report provided in the embodiments of this application.

An embodiment of this application provides an apparatus for sending a P-MPR report, which is applicable to a terminal 300. As shown in FIG. 4, the apparatus includes:
a sending module 310, configured to send a P-MPR report to a network side device in a case that a preset P-MPR report reporting condition is met, where the P-MPR report includes a P-MPR value of at least one beam.

In this embodiment of this application, the terminal sends the P-MPR report to the network side device in a case that the preset P-MPR report reporting condition is met, where the P-MPR report includes the P-MPR value of the at least one beam. The network side device may send scheduling information to the terminal according to the P-MPR report, to perform channel scheduling and reference signal transmission. The technical solution in this embodiment is applicable to a terminal with a plurality of antenna panels. After the terminal reports P-MPR values of beams, it is helpful for the terminal to select a better antenna panel and beam according to the P-MPR values of the beams, thereby ensuring correct transmission of data and optimizing transmission performance.

In some embodiments, the preset P-MPR report reporting condition includes at least one of the following:
determining, by the terminal, occurrence of a maximum permissible exposure event;
determining, by the terminal, that equivalent isotropically radiated power reaches or exceeds a maximum permissible exposure standard;
determining, by the terminal, that the equivalent isotropically radiated power reaches or exceeds a first preset value;
determining, by the terminal, that maximum equivalent isotropically radiated power reaches or exceeds the maximum permissible exposure standard;
determining, by the terminal, that the maximum equivalent isotropically radiated power reaches or exceeds a second preset value;
determining, by the terminal, that transmit power reaches or exceeds a third preset value;
determining, by the terminal, that the transmit power reaches or exceeds the maximum permissible exposure standard;
determining, by the terminal, that maximum transmit power reaches or exceeds a fourth preset value;
determining, by the terminal, that the maximum transmit power reaches or exceeds the maximum permissible exposure standard;
determining, by the terminal, that a radio frequency device is close to a human body;
an antenna panel being activated or started or added;
a measured path loss value or a variation value of path loss of a current beam meeting a first preset condition;
a power reduction value or a variation value of power of the current beam meeting a second preset condition;
a P-MPR value or a variation value of P-MPR value of the current beam meeting a third preset condition;
a link quality value or a variation value of link quality of the current beam meeting a fourth preset condition;
a difference between the measured path loss value of the current beam and a measured path loss value of a first beam meeting a fifth preset condition, where the first beam is a beam different from the current beam, a target beam, or an unused beam;
a difference between the power reduction value of the current beam and a power reduction value of the first beam meeting a sixth preset condition;
a difference between the P-MPR value of the current beam and a P-MPR value of the first beam meeting a seventh preset condition; and
a difference between the link quality value of the current beam and a link quality value of the first beam meeting an eighth preset condition.

In the foregoing solution, the terminal needs to measure the equivalent isotropically radiated power, the maximum equivalent isotropically radiated power, the transmit power, and the maximum transmit power first, and then, determines whether the preset P-MPR report reporting condition is met according to measurement results.

In some embodiments, the P-MPR report further includes at least one of the following:
identification information of the at least one beam;
a maximum output power value of the at least one beam;
a power headroom value of the at least one beam; and
identification information of an antenna panel corresponding to the at least one beam.

In some embodiments, the identification information of the beam includes at least one of the following:
identification information or index information or indication information of a sounding reference signal resource SRS resource;
identification information or index information or indication information of an SRS resource set;
source reference signal information in spatial relation information of the SRS resource;
identification information or index information or indication information of a first resource; and
identification information or index information or indication information of a first resource set.

The first resource includes at least one of the following:
a downlink reference signal resource DL RS resource;
a source reference signal in a transmission configuration indication TCI state of the DL RS resource;
a reference signal resource used for beam training;
a source reference signal in a TCI state or in a spatial relation of the reference signal resource used for beam training;
a candidate beam reference signal resource;
a source reference signal in a TCI state or in a spatial relation of the candidate beam reference signal resource; and
a synchronization signal block SSB resource.

In some embodiments, a downlink reference signal includes at least one of the following: an SSB and a channel state information reference signal CSI-RS.

In the foregoing embodiments, the identification information or the index information or the indication information of the first resource includes at least one of the following:
identification information or index information or indication information of one first resource associated with the SRS resource; and
identification information or index information or indication information of a first resource in a first resource set associated with the SRS resource;
   and/or
the identification information or the index information or the indication information of the first resource set includes:
   identification information or index information or indication information of the first resource set associated with the SRS resource.

For example, in a specific example, identification information or index information or indication information of the downlink reference signal resource includes at least one of the following:
identification information or index information or indication information of one DL RS resource associated with the SRS resource; and
identification information or index information or indication information of a DL RS resource in a DL RS resource set associated with the SRS resource.

In some embodiments, in a case that the reference signal resource used for beam training or the candidate beam reference signal resource is not configured, the identification information of the beam includes identification information or index information or indication information of the SSB resource, or includes identification information or index information or indication information of an SSB resource set.

In some embodiments, the identification information of the antenna panel corresponding to the at least one beam includes an explicit antenna panel identifier or an implicit antenna panel identifier, where
the explicit antenna panel identifier includes at least one of the following: an identifier of the antenna panel, a reference signal resource identifier or index or indication corresponding to the antenna panel, a reference signal resource set identifier or index or indication corresponding to the antenna panel, a transmission configuration indication TCI state identifier or index or indication corresponding to the antenna panel, a quasi-colocation QCL information identifier or index or indication corresponding to the antenna panel, and a spatial relation identifier or index or indication corresponding to the antenna panel; and
the implicit antenna panel identifier is first information and capable of being used for determining the identification information of the antenna panel, where the first information includes at least one of the following: a correspondence between a DL RS resource and the antenna panel, a correspondence between an uplink reference signal resource UL RS resource and the antenna panel, a correspondence between a DL RS resource set and the antenna panel, a correspondence between a UL RS resource set and the antenna panel, a correspondence between DL RS resource configuration information and the antenna panel, a correspondence between UL RS resource configuration information and the antenna panel, and beam identification information.

In some embodiments, the P-MPR report includes the identification information of the antenna panel corresponding to the at least one beam in a case that at least one of the following conditions is met:
reporting the P-MPR report to the network side device;
the at least one beam corresponding to different antenna panels;
the antenna panel corresponding to the at least one beam being different from an antenna panel corresponding to a current beam;
the at least one beam including a beam on a currently inactivated antenna panel;
the at least one beam including a beam on a currently unused antenna panel;
a quantity of antenna panels corresponding to the at least one beam being greater than 1;
antenna panel on which a beam corresponding to the P-MPR value is located being different from the antenna panel corresponding to the current beam;
the P-MPR value including a P-MPR value of the beam on the currently inactivated antenna panel;
the P-MPR value including a P-MPR value of the beam on the currently unused antenna panel;
a quantity of antenna panels on which the beam corresponding to the P-MPR value is located being greater than 1;
an antenna panel being activated or started or added; and
a current uplink beam being to be switched or having been switched to be a beam on a second antenna panel, where the second antenna panel is an antenna panel other than an antenna panel on which the current uplink beam is located.

In some embodiments, the sending module sends the P-MPR report by using any one of the following beams:
a beam on a currently activated antenna panel;
a currently used beam;
an other beam on an antenna panel on which the currently used beam is located;
a beam on a currently inactivated antenna panel;
a beam on a currently unused antenna panel; and
a currently unused beam.

In some embodiments, the P-MPR report is carried in at least one of the following:
a power headroom report; and
a beam report.

In some embodiments, the sending module is specifically configured to perform at least one of the following:
carry the P-MPR report in the beam report in a case that first configuration information from the network side device is received;
carry a first value in the beam report in a case that second configuration information from the network side device is received, where the first value is calculated by using a layer 1 reference signal received power L1-RSRP value and the P-MPR value;
carry the P-MPR report in the power headroom report in a case that third configuration information from the network side device is received or a preset power headroom report trigger condition is met; and
carry a second value in the power headroom report in a case that fourth configuration information from the network side device is received or the power headroom report trigger condition is met, where the second value is calculated by using a power headroom and the P-MPR value or calculated by using maximum transmit power and the P-MPR value.

The first value may be obtained by adding the L1-RSRP value to the P-MPR value or subtracting the L1-RSRP value from the P-MPR value. The second value may be obtained by adding the power headroom to the P-MPR value or subtracting the power headroom from the P-MPR value, or may be obtained by adding the maximum transmit power to the P-MPR value or subtracting the maximum transmit power from the P-MPR value.

In some embodiments, the first configuration information is a report quantity reportQuantity in a channel state information report configuration and indicates carrying of the P-MPR report in the beam report;
the second configuration information indicates carrying of the first value in the beam report, where the first value is specific to an uplink beam;
the third configuration information indicates carrying of the P-MPR report in the power headroom report; and
the fourth configuration information indicates carrying of the second value in the power headroom report.

In some embodiments, the sending module is specifically configured to: send a power headroom report carrying a P-MPR report and a power headroom report without carrying a P-MPR report by using different uplink resources; and/or
send a beam report carrying a P-MPR report and a beam report without carrying a P-MPR report by using different uplink resources.

In some embodiments, the uplink resource used for sending the power headroom report carrying a P-MPR report is configured by the network side device; and/or
the uplink resource used for sending the power headroom report without carrying a P-MPR report is configured by the network side device; and/or
the uplink resource used for sending the beam report carrying a P-MPR report is configured by the network side device; and/or
the uplink resource used for sending the beam report without carrying a P-MPR report is configured by the network side device.

In this way, according to the uplink resources, the beam report carrying a P-MPR report and the beam report without carrying a P-MPR report can be distinguished, and the power headroom report carrying a P-MPR report and the power headroom report without carrying a P-MPR report can be distinguished.

In some embodiments, the sending module is specifically configured to: scramble the power headroom report carrying a P-MPR report and the power headroom report without carrying a P-MPR report by using different scrambling codes; and/or
scramble the beam report carrying a P-MPR report and the beam report without carrying a P-MPR report by using different scrambling codes.

In this way, according to different scrambling codes, the beam report carrying a P-MPR report and the beam report without carrying a p-MPR report can be distinguished, and the power headroom report carrying a P-MPR report and the power headroom report without carrying a P-MPR report can be distinguished.

The apparatus for sending a P-MPR report in this embodiment of this application may be an apparatus, or may be a component, an integrated circuit, or a chip in a terminal. The apparatus may be a mobile electronic device or may be a non-mobile electronic device. For example, the mobile electronic device may be a mobile phone, a tablet personal computer, a notebook computer, a handheld computer, an in-vehicle electronic device, a wearable device, an ultra-mobile personal computer (ultra-mobile personal computer, UMPC), a netbook, a personal digital assistant (personal digital assistant, PDA), or the like; and the non-mobile electronic device may be a network attached storage (Network Attached Storage, NAS), a personal computer (personal computer, PC), a television (television, TV), a teller machine, a self-service machine, or the like. This is not specifically limited in this embodiment of this application.

The apparatus for sending a P-MPR report in this embodiment of this application may be an apparatus having an operating system. The operating system may be an Android (Android) operating system, or may be an ios operating system, or may be another possible operating system. This is not specifically limited in this embodiment of this application.

It should be noted that an execution entity of the method for receiving a P-MPR report provided in the embodiments of this application may be an apparatus for receiving a P-MPR report, or may be a module that is in the apparatus for receiving a P-MPR report and that is configured to execute and load the method for receiving a P-MPR report. In this embodiment of this application, an example in which the method for receiving a P-MPR report is executed and loaded by the apparatus for receiving a P-MPR report is used to describe the method for receiving a P-MPR report provided in the embodiments of this application.

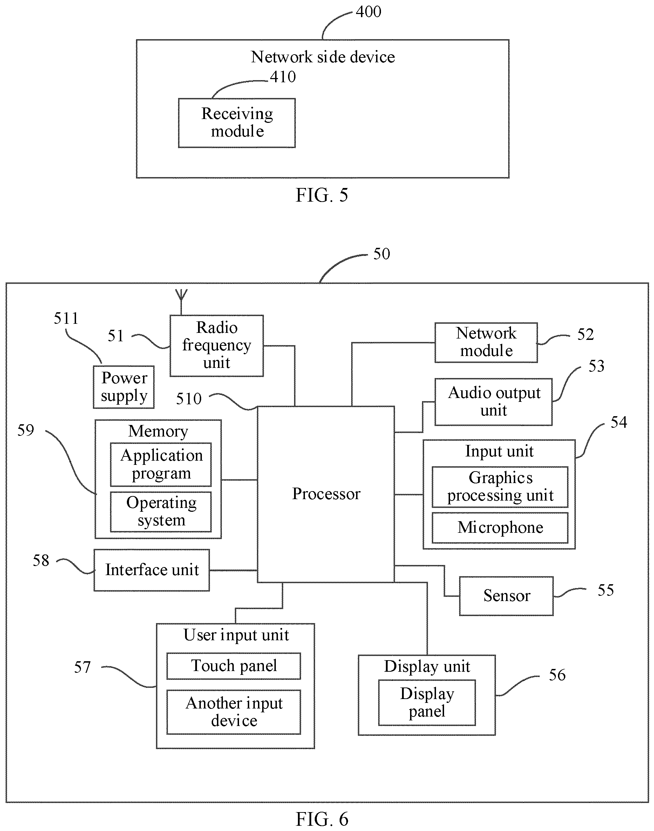

An embodiment of this application provides an apparatus for receiving a P-MPR report, which is applicable to a network side device 400. As shown in FIG. 5, the apparatus includes:
a receiving module 410, configured to receive a P-MPR report sent by a terminal, where the P-MPR report includes a P-MPR value of at least one beam.

In this embodiment of this application, the terminal sends the P-MPR report to the network side device in a case that a preset P-MPR report reporting condition is met, where the P-MPR report includes the P-MPR value of the at least one beam. The network side device may send scheduling information to the terminal according to the P-MPR report, to perform channel scheduling and reference signal transmission. The technical solution in this embodiment is applicable to a terminal with a plurality of antenna panels. After the terminal reports P-MPR values of beams, it is helpful for the terminal to select a better antenna panel and beam according to the P-MPR values of the beams, thereby ensuring correct transmission of data and optimizing transmission performance.

In some embodiments, the sending module is further configured to perform at least one of the following:
send first configuration information to the terminal to indicate carrying of the P-MPR report in the beam report;
send second configuration information to the terminal to indicate carrying of a first value in the beam report, where the first value is calculated by using a layer 1 reference signal received power L1-RSRP value and the P-MPR value;
send third configuration information to the terminal to indicate carrying of the P-MPR report in the power headroom report; and
send fourth configuration information to the terminal to indicate carrying of a second value in the power headroom report, where the second value is calculated by using a power headroom and the P-MPR value or calculated by using maximum transmit power and the P-MPR value.

It may be indicated that the first value is obtained by adding the L1-RSRP value to the P-MPR value or subtracting the L1-RSRP value from the P-MPR value. It may be indicated that the second value is obtained by adding the power headroom to the P-MPR value or subtracting the power headroom from the P-MPR value, or the second value is obtained by adding the maximum transmit power to the P-MPR value or subtracting the maximum transmit power from the P-MPR value.

In some embodiments,
the first configuration information is a report quantity reportQuantity in a channel state information report configuration and indicates carrying of the P-MPR report in the beam report;
the second configuration information indicates carrying of the first value in the beam report, where the first value is specific to an uplink beam;
the third configuration information indicates carrying of the P-MPR report in the power headroom report; and
the fourth configuration information indicates carrying of the second value in the power headroom report.

In some embodiments, the apparatus further includes a configuration module, configured to perform at least one of the following:
configure, for the terminal, an uplink resource used for sending a power headroom report carrying a P-MPR report;
configure, for the terminal, an uplink resource used for sending a power headroom report without carrying a P-MPR report;
configure, for the terminal, an uplink resource used for sending a beam report carrying a P-MPR report; and
configure, for the terminal, an uplink resource used for sending a beam report without carrying a P-MPR report.

In this way, according to the uplink resources, the beam report carrying a P-MPR report and the beam report without carrying a P-MPR report can be distinguished, and the power headroom report carrying a P-MPR report and the power headroom report without carrying a P-MPR report can be distinguished.

The apparatus for receiving a P-MPR report in this embodiment of this application may be an apparatus, or may be a component, an integrated circuit, or a chip in a terminal. The apparatus may be a mobile electronic device or may be a non-mobile electronic device. For example, the mobile electronic device may be a mobile phone, a tablet personal computer, a notebook computer, a handheld computer, an in-vehicle electronic device, a wearable device, an ultra-mobile personal computer (ultra-mobile personal computer, UMPC), a netbook, a personal digital assistant (personal digital assistant, PDA), or the like; and the non-mobile electronic device may be a network attached storage (Network Attached Storage, NAS), a personal computer (personal computer, PC), a television (television, TV), a teller machine, a self-service machine, or the like. This is not specifically limited in this embodiment of this application.

The apparatus for receiving a P-MPR report in this embodiment of this application may be an apparatus having an operating system. The operating system may be an Android (Android) operating system, or may be an ios operating system, or may be another possible operating system. This is not specifically limited in this embodiment of this application.

Optionally, an embodiment of this application further provides an electronic device, including a processor, a memory, and a program or an instruction stored in the memory and executable on the processor. When the program or instruction is executed by the processor, all processes of the embodiments of the method for sending a P-MPR report or the method for receiving a P-MPR report are implemented, and the same technical effects can be achieved. To avoid repetition, details are not described herein again.

It should be noted that, the electronic device in this embodiment of this application includes the foregoing mobile electronic device and non-mobile electronic device.

The electronic device in this embodiment may be a terminal. FIG. 6 is a schematic diagram of a hardware structure of a terminal for implementing the embodiments of this application. The terminal 50 includes, but is not limited to, components such as a radio frequency unit 51, a network module 52, an audio output unit 53, an input unit 54, a sensor 55, a display unit 56, a user input unit 57, an interface unit 58, a memory 59, a processor 510, and a power supply 511. A person skilled in the art may understand that a terminal structure shown in FIG. 6 constitutes no limitation on the terminal, and the terminal may include more or fewer components than those shown in the figure, or some components may be combined, or a different component deployment may be used. In this embodiment of this application, the terminal includes, but is not limited to, a mobile phone, a tablet computer, a notebook computer, a handheld computer, an in-vehicle terminal, a wearable device, a pedometer, and the like.

It should be understood that, in this embodiment of this application, the radio frequency unit 51 may be configured to receive and transmit information or receive and transmit a signal during a call. Specifically, the radio frequency unit is configured to receive downlink data from a base station, then transmit the downlink data to the processor 510 for processing, and additionally, transmit uplink data to the base station. Generally, the radio frequency unit 51 includes, but is not limited to, an antenna, at least one amplifier, a transceiver, a coupler, a low noise amplifier, a duplexer, and the like. In addition, the radio frequency unit 51 may further communicate with a network device and another device through a wireless communication system.

The memory 59 may be configured to store software programs and various data. The memory 59 may mainly include a program storage region and a data storage region. The program storage region may store an operating system, an application program (such as a sound playback function or an image display function) that is required by at least one function, and the like. The data storage region may store data (such as audio data or an address book) that is created according to use of the mobile phone, and the like. In addition, the memory 59 may include a high-speed random access memory, and may further include a non-volatile memory, such as at least one magnetic disk storage device, a flash memory, or another volatile solid-state storage device.

The processor 510 is a control center of the terminal, and connects to various parts of the entire terminal by using various interfaces and lines. By running or executing the software program and/or module stored on the memory 59, and invoking the data stored on the memory 59, the processor performs various functions of the terminal and processes data, thereby performing overall monitoring on the terminal. The processor 510 may include one or more processing units. Preferably, the processor 510 may integrate an application processor and a modem processor. The application processor mainly processes an operating system, a user interface, an application program, and the like. The modem processor mainly processes wireless communication. It can be understood that, the foregoing modem processor may not be integrated into the processor 510.

The terminal 50 may further include the power supply 511 (such as a battery) for supplying power to the components. Preferably, the power supply 511 may be logically connected to the processor 510 by using a power management system, thereby implementing functions such as charging, discharging, and power consumption management by using the power management system.

In addition, the terminal 50 includes some functional modules that are not shown, and details are not described herein again.

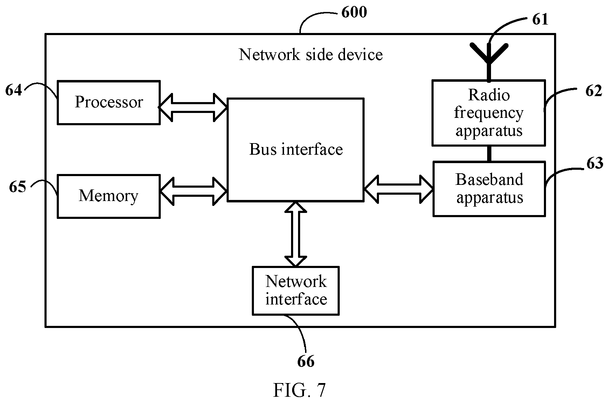

The electronic device in this embodiment may alternatively be a network side device. As shown in FIG. 7, the network side device 600 includes an antenna 61, a radio frequency apparatus 62, and a baseband apparatus 63. The antenna 61 is connected to the radio frequency apparatus 62. In an uplink direction, the radio frequency apparatus 62 receives information by using the antenna 61, and sends the received information to the baseband apparatus 63 for processing. In a downlink direction, the baseband apparatus 63 processes to-be-sent information and sends the to-be-sent information to the radio frequency apparatus 62. The radio frequency apparatus 62 sends out the received information by using the antenna 61 after processing the received information.

The foregoing frequency band processing apparatus may be located in the baseband apparatus 63. The method performed by the network side device in the foregoing embodiments may be implemented in the baseband apparatus 63, and the baseband apparatus 63 includes a processor 64 and a memory 65.

The baseband apparatus 63 may include, for example, at least one baseband board on which a plurality of chips are arranged. As shown in FIG. 7, one of the chips is, for example, the processor 64 and is connected to the memory 65, to invoke a program on the memory 65 to perform operations of the network side device shown in the foregoing method embodiments.

The baseband apparatus 63 may further include a network interface 66, configured to exchange information with the radio frequency apparatus 62. The interface is, for example, a common public radio interface (common public radio interface, CPRI).

The processor herein may be a processor; or may be a general term for a plurality of processing elements. For example, the processor may be a CPU, an ASIC, or may be one or more integrated circuits configured to implement the method performed by the foregoing network side device, for example, one or more microprocessors DSPs or one or more field programmable gate arrays FPGAs. A storage element may be a memory, or may be a general term for a plurality of storage elements.

The memory 65 may be a volatile memory or a non-volatile memory, or may include both a volatile memory and a non-volatile memory. The non-volatile memory may be a read-only memory (Read-OnlyMemory, ROM), a programmable read-only memory (ProgrammableROM, PROM), an erasable programmable read-only memory (ErasablePROM, EPROM), an electrically erasable programmable read-only memory (ElectricallyEPROM, EEPROM), or a flash memory. The volatile memory may be a random access memory (RandomAccessMemory, RAM), and is used as an external cache. Through example but not limitative description, many forms of RAMs may be used, for example, a static random access memory (StaticRAM, SRAM), a dynamic random access memory (Dynamic RAMDynamicRAM, DRAM), a synchronous dynamic random access memory (SynchronousDRAM, SDRAM), a double data rate synchronous dynamic random access memory (DoubleDataRateSDRAM, DDRSDRAM), an enhanced synchronous dynamic random access memory (EnhancedSDRAM, ESDRAM), a synchlink dynamic random access memory (SynchlinkDRAM, SLDRAM), and a direct rambus random access memory (DirectRambusRAM, DRRAM). The memory 65 described in this application is intended to include, but is not limited to, these and any other suitable types of memories.

An embodiment of this application further provides a readable storage medium, storing a program or an instruction. When the program or instruction is executed by a processor, all processes of the embodiments of the method for sending a P-MPR report or the method for receiving a P-MPR report are implemented, and the same technical effects can be achieved. To avoid repetition, details are not described herein again.

The processor is the processor in the electronic device described in the foregoing embodiments. The readable storage medium includes a computer-readable storage medium, for example, a read-only memory (Read-Only Memory, ROM), a random access memory (Random Access Memory, RAM), a magnetic disk, an optical disc, or the like.

An embodiment of this application further provides a chip, including: a processor and a communication interface, where the communication interface is coupled to the processor, and the processor is configured to execute a program or an instruction, to implement all processes of the embodiments of the method for sending a P-MPR report or the method for receiving a P-MPR report, and the same technical effects can be achieved. To avoid repetition, details are not described herein again.

It should be understood that, the chip mentioned in this embodiment of this application may also be referred to as a system-level chip, a system chip, a chip system, a system on chip, or the like.

It should be noted that the terms "include", "comprise", or any other variation thereof in this specification is intended to cover a non-exclusive inclusion, so that a process, a method, an object, or an apparatus that includes a series of elements not only includes those elements but also includes other elements that are not expressly listed, or further includes elements inherent to such a process, a method, an object, or an apparatus. Without more limitations, elements defined by the sentence "including one" does not exclude that there are still other same elements in the process, method, object, or apparatus. In addition, it should be noted that within the scope of the method and apparatus in the implementations of this application, functions are not limited to be performed in an order shown or discussed, and may be performed according to the involved functions in a substantially simultaneous manner or in a reverse order. For example, the described method may be performed in an order different from the described order, and various steps may be added, omitted, or combined. In addition, features described with reference to some examples may also be combined in other examples.

Through the descriptions of the foregoing implementations, a person skilled in the art may clearly understand that the method according to the foregoing embodiments may be implemented by using software in combination with a necessary general hardware platform, and certainly, may alternatively be implemented by using hardware. But in many cases, the former manner is a better implementation. Based on such an understanding, the technical solutions of this application essentially or the part contributing to the existing technology may be implemented in a form of a software product. The computer software product is stored in a storage medium (such as a read-only medium (ROM)/a random access memory (RAM), a magnetic disk, or an optical disc) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. But this application is not limited to the specific embodiments described above, and the specific embodiments described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A method for sending a power management maximum power reduction P-MPR report, comprising:
sending, by a terminal, a P-MPR report to a network side device in a case that a preset P-MPR report reporting condition is met, wherein the P-MPR report comprises a P-MPR value of at least one beam.

2. The method for sending a P-MPR report according to claim 1, wherein the preset P-MPR report reporting condition comprises at least one of following:
determining, by the terminal, occurrence of a maximum permissible exposure event;
determining, by the terminal, that equivalent isotropically radiated power reaches or exceeds a maximum permissible exposure standard;
determining, by the terminal, that the equivalent isotropically radiated power reaches or exceeds a first preset value;
determining, by the terminal, that maximum equivalent isotropically radiated power reaches or exceeds the maximum permissible exposure standard;
determining, by the terminal, that the maximum equivalent isotropically radiated power reaches or exceeds a second preset value;
determining, by the terminal, that transmit power reaches or exceeds a third preset value;
determining, by the terminal, that the transmit power reaches or exceeds the maximum permissible exposure standard;
determining, by the terminal, that maximum transmit power reaches or exceeds a fourth preset value;
determining, by the terminal, that the maximum transmit power reaches or exceeds the maximum permissible exposure standard;
determining, by the terminal, that a radio frequency device is close to a human body;
an antenna panel being activated or started or added;
a measured path loss value or a variation value of path loss of a current beam meeting a first preset condition;
a power reduction value or a variation value of power of the current beam meeting a second preset condition;
a P-MPR value or a variation value of P-MPR value of the current beam meeting a third preset condition;
a link quality value or a variation value of link quality of the current beam meeting a fourth preset condition;
a difference between the measured path loss value of the current beam and a measured path loss value of a first beam meeting a fifth preset condition, wherein the first beam is a beam different from the current beam, a target beam, or an unused beam;
a difference between the power reduction value of the current beam and a power reduction value of the first beam meeting a sixth preset condition;
a difference between the P-MPR value of the current beam and a P-MPR value of the first beam meeting a seventh preset condition; and
a difference between the link quality value of the current beam and a link quality value of the first beam meeting an eighth preset condition.

3. The method for sending a P-MPR report according to claim 1, wherein the P-MPR report further comprises at least one of following:
identification information of the at least one beam;
a maximum output power value of the at least one beam;
a power headroom value of the at least one beam; and
identification information of an antenna panel corresponding to the at least one beam.

4. The method for sending a P-MPR report according to claim 3, wherein the identification information of the beam comprises at least one of following:
identification information or index information or indication information of a sounding reference signal resource SRS resource;
identification information or index information or indication information of an SRS resource set;
source reference signal information in spatial relation information of the SRS resource;
identification information or index information or indication information of a first resource; and
identification information or index information or indication information of a first resource set.

5. The method for sending a P-MPR report according to claim 4, wherein the first resource comprises at least one of following:
a downlink reference signal resource DL RS resource;
a source reference signal in a transmission configuration indication TCI state of the DL RS resource;
a reference signal resource used for beam training;
a source reference signal in a TCI state or in a spatial relation of the reference signal resource used for beam training;
a candidate beam reference signal resource;
a source reference signal in a TCI state or in a spatial relation of the candidate beam reference signal resource; and
a synchronization signal block SSB resource.

6. The method for sending a P-MPR report according to claim 5, wherein a downlink reference signal comprises at least one of following: an SSB and a channel state information reference signal CSI-RS.

7. The method for sending a P-MPR report according to claim 5, wherein the identification information or the index information or the indication information of the first resource comprises at least one of following:
identification information or index information or indication information of one first resource associated with the SRS resource; and
identification information or index information or indication information of a first resource in a first resource set associated with the SRS resource;
and/or
the identification information or the index information or the indication information of the first resource set comprises:
identification information or index information or indication information of the first resource set associated with the SRS resource.

8. The method for sending a P-MPR report according to claim 4, wherein in a case that a reference signal resource used for beam training or a candidate beam reference signal resource is not configured, the identification information of the beam comprises the identification information or the index information or the indication information of the SSB resource, or comprises the identification information or the index information or the indication information of the SSB resource set.

9. The method for sending a P-MPR report according to claim 3, wherein the identification information of the antenna panel corresponding to the at least one beam comprises an explicit antenna panel identifier or an implicit antenna panel identifier;
the explicit antenna panel identifier comprises at least one of following: an identifier of the antenna panel, a reference signal resource identifier or index or indication corresponding to the antenna panel, a reference signal resource set identifier or index or indication corresponding to the antenna panel, a transmission configuration indication TCI state identifier or index or indication corresponding to the antenna panel, a quasi-colocation QCL information identifier or index or indication corresponding to the antenna panel, and a spatial relation identifier or index or indication corresponding to the antenna panel; and
the implicit antenna panel identifier is first information and capable of being used for determining the identification information of the antenna panel, wherein the first information comprises at least one of following: a correspondence between a DL RS resource and the antenna panel, a correspondence between an uplink reference signal resource UL RS resource and the antenna panel, a correspondence between a DL RS resource set and the antenna panel, a correspondence between a UL RS resource set and the antenna panel, a correspondence between DL RS resource configuration information and the antenna panel, a correspondence between UL RS resource configuration information and the antenna panel, and beam identification information.

10. The method for sending a P-MPR report according to claim 3, wherein the P-MPR report comprises the identification information of the antenna panel corresponding to the at least one beam in a case that at least one of following conditions is met:
reporting the P-MPR report to the network side device;
the at least one beam corresponding to different antenna panels;
the antenna panel corresponding to the at least one beam being different from an antenna panel corresponding to a current beam;
the at least one beam comprising a beam on a currently inactivated antenna panel;
the at least one beam comprising a beam on a currently unused antenna panel;
a quantity of antenna panels corresponding to the at least one beam being greater than 1;
an antenna panel on which a beam corresponding to the P-MPR value is located being different from an antenna panel corresponding to the current beam;
the P-MPR value comprising a P-MPR value of the beam on the currently inactivated antenna panel;
the P-MPR value comprising a P-MPR value of the beam on the currently unused antenna panel;
a quantity of antenna panels on which the beam corresponding to the P-MPR value is located being greater than 1;
an antenna panel being activated or started or added; and
a current uplink beam being to be switched or having been switched to be a beam on a second antenna panel, wherein the second antenna panel is an antenna panel other than an antenna panel on which the current uplink beam is located.

11. The method for sending a P-MPR report according to claim 1, wherein the terminal sends the P-MPR report by using any one of following beams:
a beam on a currently activated antenna panel;
a currently used beam;
an other beam on an antenna panel on which the currently used beam is located;
a beam on a currently inactivated antenna panel;
a beam on a currently unused antenna panel; and
a currently unused beam.

12. The method for sending a P-MPR report according to claim 1, wherein the P-MPR report is carried in at least one of following:
a power headroom report; and
a beam report.

13. The method for sending a P-MPR report according to claim 12, further comprising at least one of following:
carrying the P-MPR report in the beam report in a case that first configuration information from the network side device is received;
carrying a first value in the beam report in a case that second configuration information from the network side device is received, wherein the first value is calculated by using a layer 1 reference signal received power L1-RSRP value and the P-MPR value;
carrying the P-MPR report in the power headroom report in a case that third configuration information from the network side device is received or a preset power headroom report trigger condition is met; and
carrying a second value in the power headroom report in a case that fourth configuration information from the network side device is received or the power headroom report trigger condition is met, wherein the second value is calculated by using a power headroom and the P-MPR value or calculated by using maximum transmit power and the P-MPR value.

14. The method for sending a P-MPR report according to claim 13, wherein
the first configuration information is a report quantity reportQuantity in a channel state information report configuration and indicates carrying of the P-MPR report in the beam report;
the second configuration information indicates carrying of the first value in the beam report, wherein the first value is specific to an uplink beam;
the third configuration information indicates carrying of the P-MPR report in the power headroom report; and
the fourth configuration information indicates carrying of the second value in the power headroom report.

15. The method for sending a P-MPR report according to claim 12, wherein
a power headroom report carrying a P-MPR report and a power headroom report without carrying a P-MPR report are sent by using different uplink resources; and/or
a beam report carrying a P-MPR report and a beam report without carrying a P-MPR report are sent by using different uplink resources.

16. The method for sending a P-MPR report according to claim 15, wherein
an uplink resource used for sending the power headroom report carrying a P-MPR report is configured by the network side device; and/or
an uplink resource used for sending the power headroom report without carrying a P-MPR report is configured by the network side device; and/or
an uplink resource used for sending the beam report carrying a P-MPR report is configured by the network side device; and/or
an uplink resource used for sending the beam report without carrying a P-MPR report is configured by the network side device.

17. The method for sending a P-MPR report according to claim 12, wherein
a power headroom report carrying a P-MPR report and a power headroom report without carrying a P-MPR report are scrambled by using different scrambling codes; and/or
a beam report carrying a P-MPR report and a beam report without carrying a P-MPR report are scrambled by using different scrambling codes.

18. A method for receiving a power management maximum power reduction P-MPR report, comprising:
receiving, by a network side device, a P-MPR report sent by a terminal, wherein the P-MPR report comprises a P-MPR value of at least one beam.

19. The method for receiving a P-MPR report according to claim 18, further comprising at least one of following:
sending first configuration information to the terminal to indicate carrying of the P-MPR report in a beam report;
sending second configuration information to the terminal to indicate carrying of a first value in the beam report, wherein the first value is calculated by using a layer 1 reference signal received power L1-RSRP value and the P-MPR value;
sending third configuration information to the terminal to indicate carrying of the P-MPR report in a power headroom report; and
sending fourth configuration information to the terminal to indicate carrying of a second value in the power headroom report, wherein the second value is calculated by using a power headroom and the P-MPR value or calculated by using maximum transmit power and the P-MPR value.

20. The method for receiving a P-MPR report according to claim 19, wherein
the first configuration information is a report quantity reportQuantity in a channel state information report configuration and indicates carrying of the P-MPR report in the beam report;
the second configuration information indicates carrying of the first value in the beam report, wherein the first value is specific to an uplink beam;
the third configuration information indicates carrying of the P-MPR report in the power headroom report; and
the fourth configuration information indicates carrying of the second value in the power headroom report.

21. The method for receiving a P-MPR report according to claim 19, further comprising at least one of following:
configuring, for the terminal, an uplink resource used for sending a power headroom report carrying a P-MPR report;
configuring, for the terminal, an uplink resource used for sending a power headroom report without carrying a P-MPR report;
configuring, for the terminal, an uplink resource used for sending a beam report carrying a P-MPR report; and
configuring, for the terminal, an uplink resource used for sending a beam report without carrying a P-MPR report.

22. An apparatus for sending a power management maximum power reduction P-MPR report, comprising:
a sending module, configured to send a P-MPR report to a network side device in a case that a preset P-MPR report reporting condition is met, wherein the P-MPR report comprises a P-MPR value of at least one beam.

23. An apparatus for receiving a power management maximum power reduction P-MPR report, comprising:
a receiving module, configured to receive a P-MPR report sent by a terminal, wherein the P-MPR report comprises a P-MPR value of at least one beam.

24. An electronic device, comprising a processor, a memory, and a program or an instruction stored in the memory and executable on the processor, wherein when the program or instruction is executed by the processor, steps of the method according to any one of claims 1 to 21 are implemented.

25. A readable storage medium, storing a program or an instruction, wherein when the program or instruction is executed by a processor, steps of the method according to any one of claims 1 to 21 are implemented.

26. A chip, comprising a processor and a communication interface, wherein the communication interface is coupled to the processor, and the processor is configured to execute a program or an instruction, to implement the method according to any one of claims 1 to 21.

27. A computer program product, wherein the computer program product is executed by at least one processor to implement the method according to any one of claims 1 to 21.

28. An electronic device, configured to perform the method according to any one of claims 1 to 21.
